# DEMANDE DE BREVET EUROPEEN

(11) **EP 3 636 965 A1**
(43) Date de publication de la demande: **15.04.2020**
(21) Numéro de dépôt: 19202066.7
(22) Date de dépôt: 08.10.2019
(51) Int. Cl.: F16J 15/06, E06B 5/16, H01L 23/373, H05K 9/00

(54) **JOINT D'ÉTANCHÉITÉ INTUMESCENT**

(30) Priorité: 10.10.2018 FR 1859399
(71) Demandeur: Etancheite Jung, 67120 Altorf (FR)
(72) Inventeur: ALLOUCHE, Julien, 67200 STRASBOURG (FR); LEWANDOWSKA, Klaudia, 67190 GRESSWILLER (FR)
(74) Mandataire: Cabinet Nuss

(57) **Abrégé**

La présente invention a pour objet un joint d'étanchéité (1) comportant une surface de fixation (2) destinée à interagir avec la surface d'une structure support (3), caractérisé en ce que le joint (1) comprend également une longueur de matériau intumescent (4) enveloppé au moins partiellement dans une gaine (5) déformable réalisée par au moins une structure métallique formant une toile comprenant au moins un maillage suffisamment restreint pour maintenir une cohésion au matériau intumescent (4) en expansion.

## Description

La présente invention se rapporte au domaine des joints d'étanchéité et plus particulièrement au domaine des joints d'étanchéité résistant à la chaleur et notamment à des températures supérieures à 200°C généralement rencontrée dans le cadre d'incendie.

Actuellement, il est courant d'équiper des portions de jonction entre deux pièces par une structure adaptée pour obtenir une étanchéité au niveau de cette jonction. Cette structure d'étanchéité est plus complexe à réaliser lorsqu'une première pièce est montée mobile par rapport à une seconde pièce. L'étanchéité se doit alors d'être obtenue principalement lorsque la première pièce et la seconde pièce sont disposées entre elles selon un arrangement particulier. De plus, pour une jonction étanche entre une pièce mobile et une pièce fixe, il est indispensable que la structure d'étanchéité puisse être automatiquement positionnée de façon optimale afin d'être fonctionnelle sans pour autant altérer la mobilité d'une pièce par rapport à l'autre.

Dans le cadre d'une étanchéité aux fortes chaleurs et notamment au feu, il est connu d'utiliser une structure d'étanchéité formée par une bande intumescente à base graphite, phosphate ou silicate de sodium fixée au niveau d'une des pièces concernées par la jonction étanche. Sous l'effet d'une forte chaleur, la bande à base graphite s'expanse et comble l'espace vide qui se trouve disposé entre les deux pièces dont la jonction est destinée à être étanchéifiée. En opérant la jonction des deux pièces, l'expansion de la bande à base de graphite participe alors à l'étanchéisation pour bloquer tout passage de part et d'autre du cloisonnement réalisé par la pièce mobile rapprochée de la pièce fixe.

Toutefois, ce type de construction présente comme défauts d'avoir, d'une part, une expansion anarchique du graphite et, d'autre part, une structure expansée friable, voire volatile sous l'effet du feu, dont la qualité d'étanchéisation est susceptible d'être rapidement dégradée. Lorsque le joint intumescent est positionné pour obtenir une étanchéité entre deux espaces entre lesquels la différence de pression est importante, par exemple dans un système d'aspiration, la structure expansée friable du graphite est alors susceptible de se déliter beaucoup plus rapidement.

La présente invention a pour but de pallier ces inconvénients en proposant un joint d'étanchéité dont l'expansion sous l'effet de la chaleur puisse être contrôlée tout en conservant la cohésion de la structure d'étanchéité.

L'invention a ainsi pour objet un joint d'étanchéité comportant une surface de fixation destinée à interagir avec la surface d'une structure support, caractérisé en ce que le joint comprend également une longueur de matériau intumescent enveloppé au moins partiellement dans une gaine déformable réalisée par au moins une structure métallique formant une toile comprenant au moins un maillage suffisamment restreint pour maintenir une cohésion au matériau intumescent en expansion.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :

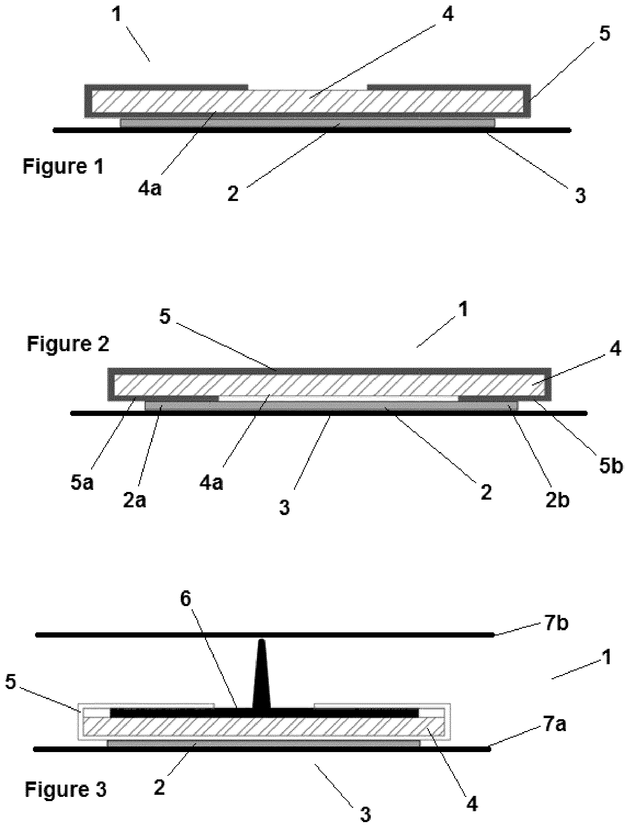

la figure 1 est une représentation schématique d'un premier exemple de construction d'un joint d'étanchéité selon l'invention avant expansion,
la figure 2 est une représentation schématique d'un second exemple de construction d'un joint d'étanchéité selon l'invention avant expansion,
la figure 3 est une représentation schématique d'un troisième exemple de construction d'un joint d'étanchéité selon l'invention avant expansion et dans lequel un élément élastomère réalise une jonction d'étanchéité à froid,
la figure 4 est une représentation schématique du premier exemple de construction d'un joint d'étanchéité selon l'invention après expansion,
la figure 5 est une représentation schématique d'un exemple de construction d'un joint d'étanchéité selon l'invention avant expansion dans lequel une partie déformée de la gaine en tissus réalise une jonction d'étanchéité à froid,
la figure 6 est une représentation schématique d'un exemple de construction d'un joint d'étanchéité selon l'invention avant expansion dans lequel plusieurs cavités sont aménagées pour recevoir un appareillage,

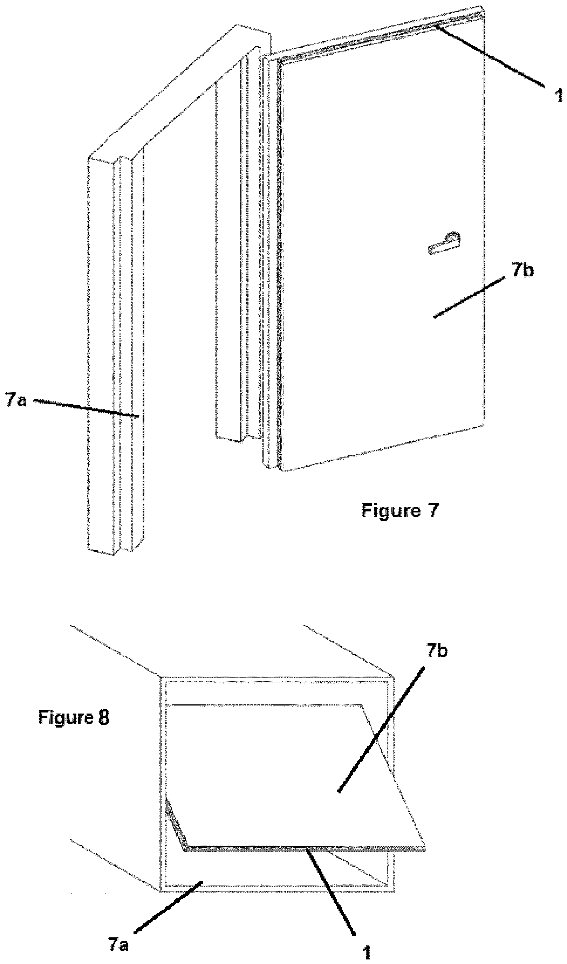

la figure 7 est une représentation schématique d'un exemple de positionnement d'un joint d'étanchéité selon l'invention entre le battant et le dormant d'une ouverture selon une première variante de construction, et
la figure 8 est une représentation schématique d'un exemple de positionnement d'un joint d'étanchéité selon l'invention entre le battant et le dormant d'une ouverture selon une seconde variante de construction.

L'invention concerne un joint d'étanchéité 1 comportant une surface de fixation 2 destinée à interagir avec la surface d'une structure support 3, caractérisé en ce que le joint 1 comprend également une longueur de matériau intumescent 4 enveloppé au moins partiellement dans une gaine 5 déformable réalisée par au moins une structure métallique formant une toile comprenant au moins un maillage suffisamment restreint pour maintenir une cohésion au matériau intumescent 4 en expansion.

Il conviendrait de comprendre le terme « toile » comme se rapportant à un arrangement obtenu par un tissage de fils disposé de façon à présenter un maillage dont l'écartement est susceptible d'être déformé sous l'effet de l'expansion du matériau intumescent 4. Cet arrangement du maillage métallique est alors susceptible de se rapporter à une disposition dans laquelle les fils sont rapprochés pour prendre la forme d'un tissus ou, alternativement, agencés selon un espacement pour prendre la forme d'un filet.

La gaine 5 qui entoure au moins partiellement le matériau intumescent 4 permet d'orienter l'expansion du matériau 4 en privilégiant l'augmentation de son volume selon une proportion encadrée. De plus, en étant structurellement déformable grâce à sa structure métallique intégrant un maillage, cette gaine 5 autorise l'expansion du matériau intumescent 4 tout en opérant un maintien de la compacité au matériau en expansion à l'intérieur de la gaine 5. La gaine 5 exerce ainsi, grâce à la souplesse de son maillage, une retenue du matériau intumescent 4 en expansion et limite, voire empêche, son expansion anarchique.

Selon un exemple particulier de construction, la gaine 5 déformable est réalisée par une superposition d'au moins deux couches de structure métallique. Une telle construction permet une optimisation de la résistance mécanique de la gaine 5 face à l'expansion du matériau intumescent 4 en présence de chaleur. Par ailleurs, cette construction particulière permet également d'obtenir un décalage entre les mailles respectives des deux couches de la structure de façon à réduire l'espacement des orifices qui traversent ces deux couches superposées de façon à optimiser le maintien et la cohésion du matériau intumescent en expansion. En effet, à partir de couches métalliques identiques dont le maillage présente un pas défini, la superposition décalée des deux couches permet d'obtenir une réduction de l'espacement traversant entre les mailles de ces couches sans réduction de la souplesse de la structure métallique, la souplesse d'une structure métallique simple augmentant avec le pas de l'espacement du maillage. De façon alternative ou complémentaire, chacune des couches de la structure métallique est susceptible de présenter des différences d'écartement de leurs mailles respectives, de sorte que la structure métallique se trouve renforcée tout en optimisant le maintien de la cohésion du matériau intumescent. Un avantage supplémentaire d'une structure métallique formée par la superposition de plusieurs couches est également de pouvoir profiter de la rigidité renforcé de la gaine 5 en opérant une mise en forme de la structure métallique préalablement à l'insertion du matériau intumescent 4 à l'intérieur de cette gaine 5. De plus, lorsque le matériau intumescent 4 présente une fluidité trop importante pour conserver une tenue selon une forme particulière, la structure métallique renforcée de la gaine 5 réalise une enveloppe rigide qui maintient le matériau intumescent 4 selon une forme ou un arrangement adapté pour le joint d'étanchéité 1 de l'invention soit fonctionnel.

Selon un autre exemple particulier de construction, le joint d'étanchéité 1 est caractérisé en ce qu'il présente un arrangement sous la forme d'une bande ou d'un cordon. Cet exemple particulier de construction présente comme avantage d'obtenir un joint d'étanchéité 1 susceptible d'être positionnable le long de portions d'interstice à étanchéifier qui présentent des architectures de différents types.

Selon un autre exemple particulier de construction, la structure métallique de la gaine 5 comprend au moins un métal ou alliage de métaux sélectionné pour ses qualités de conductivité électrique. De façon préférée, la structure métallique comprend un ou plusieurs métaux issus d'une liste comprenant notamment l'argent, le cuivre, l'or ou encore l'aluminium. Les qualités de conductivité de la structure métallique de la gaine 5 permettent de profiter de la position du joint d'étanchéité 1 de l'invention selon un arrangement en bande ou en cordon le long de différentes structures pour assurer au moins une partie d'une connexion électrique entre deux éléments. Le joint d'étanchéité 1 de l'invention est alors apte à réaliser une partie de l'architecture d'un réseau électrique dans lequel il s'intègre.

Selon un exemple particulier complémentaire, les propriétés de conductivité électrique de la structure métallique de la gaine 5 sont utilisées comme une résistance chauffante susceptible d'activer les propriétés expansives du matériau intumescent 4. Aussi, selon cet exemple de construction, la gaine 5 du joint 1 de l'invention est connectée à un circuit électrique de sorte que, sous l'effet d'un actionnement des propriétés de résistance chauffante de la gaine 5, la chaleur de la structure métallique de la gaine 5 active l'expansion du matériau intumescent 4 qu'elle enveloppe. L'expansion du joint d'étanchéité 1 de l'invention peut ainsi être contrôlée et actionnée, par exemple par un dispositif de commande associé au circuit électrique. Par ailleurs, les propriétés conductivité électrique de la structure métallique de la gaine 5 sont également susceptibles d'être couplées à celles du matériau intumescent 4 du joint d'étanchéité 1, par exemple lorsque ce matériau intumescent 4 est du graphite.

Selon un autre exemple particulier de construction, le caractérisé en ce que la structure métallique comprend au moins un métal ou alliage de métaux sélectionné pour ses qualités de conductivité thermique. De façon préférée, la structure métallique comprend un ou plusieurs métaux issus d'une liste comprenant notamment l'argent, le cuivre, le nickel, le chrome, le fer et l'aluminium ou encore un ou plusieurs alliages tels que le nichrome, le kanthal ou encore le cupronickel. Les qualités de conductivité thermique de la structure métallique de la gaine 5 permettent alors d'optimiser la transmission de chaleur le long de l'ensemble de la structure métallique de la gaine 5 du joint d'étanchéité 1, de sorte que la réaction d'expansion du matériau intumescent 4 s'en trouve accélérée sur la longueur du joint 1 associée avec la structure métallique.

Selon un autre exemple particulier de construction du joint d'étanchéité 1 de l'invention, le matériau intumescent 4 est arrangé pour réaliser au moins un logement ou une cavité 8 apte à recevoir un appareillage. Il convient de comprendre le terme « appareillage » comme se rapportant à tout appareil, équipement ou dispositif dont le dimensionnement et l'encombrement sont adaptés à son intégration dans l'épaisseur d'un joint d'étanchéité 1. C'est ainsi que l'appareillage est susceptible de concerner, par exemple un câblage ou un réseau de connexion qui profite de l'arrangement du joint d'étanchéité allongé en cordon ou en bande au niveau d'une installation. Selon cet exemple de construction, le matériau intumescent 4 est configuré pour entourer, partiellement ou totalement, un appareillage positionné dans une cavité 8 du joint d'étanchéité 1. Selon l'arrangement du joint d'étanchéité 1, notamment sa largeur et son épaisseur, le matériau intumescent 4 est adapté pour comprendre plusieurs cavités 8 permettant le positionnement de différents appareillages.

De même, en étant positionné dans une cavité du matériau intumescent 4, l'appareillage est entouré, partiellement ou totalement, par la gaine 5 qui enveloppe le matériau intumescent. Aussi, selon un autre exemple particulier de construction du joint d'étanchéité 1, les mailles d'au moins une partie du maillage de la structure métallique de la gaine 5 sont disposées selon un pas arrangé pour la réalisation d'une cage de Faraday. Cet arrangement particulier du maillage de la structure métallique de la gaine 5 permet d'opérer une protection ou un blindage électromagnétique des appareillages ou équipements, par exemple électrique ou électroniques, disposés dans l'épaisseur du joint d'étanchéité 1. Ainsi, le matériel électronique logé dans une cavité du joint d'étanchéité 1 profite des propriétés de la gaine 5 pour optimiser son fonctionnement à l'écart d'éventuelles perturbations électromagnétiques, par exemples en apportant une protection contre la foudre, contre des champs rayonnés à haute intensité ou encore dans le cadre de réductions de signatures radar.

Selon un autre exemple particulier de construction de l'invention, le matériau intumescent 4 comprend une surface 4a destinée à être contact, direct ou indirect, avec une pièce 7a qui réalise la surface d'une structure support 3 et au niveau de laquelle un espace qui forme une jonction avec une seconde pièce 7b doit être comblé, au moins partiellement, pour en étanchéifier la jonction. Selon un autre exemple particulier, cette surface 4a du matériau intumescent 4 est associée à une surface de fixation 2 du joint 1 susceptible d'être réalisée avec un adhésif 2 qui participe à la fixation du joint 1 de l'invention sur une structure support. Selon cet exemple de réalisation, l'adhésif 2 est disposé au niveau d'une surface de la gaine déformable 5 qui enveloppe le matériau intumescent 4. De façon alternative ou complémentaire, l'adhésif 2 qui participe à la fixation du joint 1 est susceptible d'être substitué par un moyen de collage ou également par tout moyen de fixation mécanique.

Selon un autre exemple particulier de construction du joint d'étanchéité 1 de l'invention, la gaine 5 déformable n'entoure que partiellement le matériau intumescent 4 de façon à laisser libre une portion de longueur du matériau intumescent 4. Cette construction particulière permet d'imposer une orientation à l'expansion du matériau intumescent 4 tout en conservant, au niveau d'au moins une partie du matériau 4, un maintien de la cohésion du matériau intumescent 4 en expansion.

Selon une première spécificité propre à cet exemple de construction précédemment énoncée, la portion de longueur du matériau intumescent 4 qui n'est pas entourée par la gaine 5 est destinée à être positionnée en vis-à-vis de la pièce 7b qui ne porte pas le joint d'étanchéité 1, c'est-à-dire en vis-à-vis du volume d'espace destiné à être comblé par le joint d'étanchéité 1 en expansion. La gaine 5 est alors positionnée de façon à border le matériau intumescent 4 de sorte que cette gaine 5 dirige et oriente l'expansion du matériau 4 en direction du volume d'espace à combler et de la pièce 7b qui ne porte pas le joint d'étanchéité 1 mais délimite le volume d'espace à étanchéifier.

Par ailleurs, selon une seconde spécificité propre à cet exemple de construction précédemment énoncée, la portion de longueur du matériau intumescent 4 qui n'est pas entourée par la gaine 5 est destinée à être positionnée contre une surface qui limite, voire empêche, son expansion. Ainsi, selon un exemple d'arrangement préféré de cette spécificité, la partie du matériau intumescent 4 qui n'est pas entourée par la gaine 5 et laissée libre, correspond à la partie du matériau intumescent 4 destinée à être positionnée en contact avec la surface de la structure support 3 sur laquelle le joint 1 doit être positionné. Selon une variante de construction, cette partie du matériau intumescent 4 qui n'est pas en contact avec la gaine 5 correspond alors, au moins en partie, à une surface du matériau intumescent 4 associée à un adhésif 2 qui réalise la surface de fixation 2 du joint d'étanchéité 1 de l'invention. A titre d'exemple, cet adhésif 2 est disposé sous forme d'une bande positionnée le long d'une longueur du matériau intumescent 4. La gaine 5 déformable est alors disposée contre le matériau intumescent 4 de façon à réaliser la jonction entre chacun des côtés de la bande adhésif 2. La gaine 5 déformable comprend ainsi un premier bord 5a positionné le long d'un premier côté 2a de la bande adhésif 2 et un second bord 5b positionné le long d'un second côté 2b de la bande adhésif 2. Aussi, selon cet exemple, le matériau intumescent 4 est enveloppé par l'association formée par la gaine 5 déformable et la bande d'adhésif 2.

Selon un autre exemple particulier de construction susceptible d'être combinée avec les autres exemples particuliers de l'invention, la gaine 5 déformable du joint d'étanchéité 1 comprend également au moins une structure textile. Selon une première spécificité de cet exemple de réalisation, ces deux structures de la gaine 5 sont superposées. Cet exemple de réalisation présente comme avantage une facilité de sa mise en oeuvre dans le cadre de la production de la gaine 5 d'un joint d'étanchéité 1 selon l'invention. Selon une seconde spécificité de cet exemple particulier de réalisation, ces deux structures de la gaine 5 sont enchevêtrées de sorte que les fils de la structure métallique sont intégrés dans l'épaisseur de la structure textile, voire en participant, totalement ou partiellement, à la trame de la structure textile de la gaine. La gaine 5 ainsi réalisée profite de la combinaison des propriétés, d'une part, de résistance de la structure métallique et, d'autre part, de la souplesse de la structure textile pour optimiser la retenue en cohésion du matériau intumescent 4 en expansion. Selon un exemple, la structure textile est réalisée par un élément tissé à partir de fibres de verre enduite de polyuréthane classée M0, c'est-à-dire résistant au feu (Poids 455 +/- 25 g/m² ; fournisseur DICKSON). Une telle structure présente comme avantages de permettre à la gaine 5 d'être déformable tout en assurant une résistance suffisante au feu et à la traction. Il s'agit notamment d'une résistance de la gaine 5 à une déchirure sous l'effet de l'augmentation de volume du matériau intumescent. Il convient de noter que, d'une part, le choix du type de tissage et, d'autre part, les sélections du diamètre des fibres et de leur matière permet d'anticiper le comportement de l'ensemble qui forme le joint d'étanchéité 1 de l'invention lors de l'expansion du matériau intumescent 4.

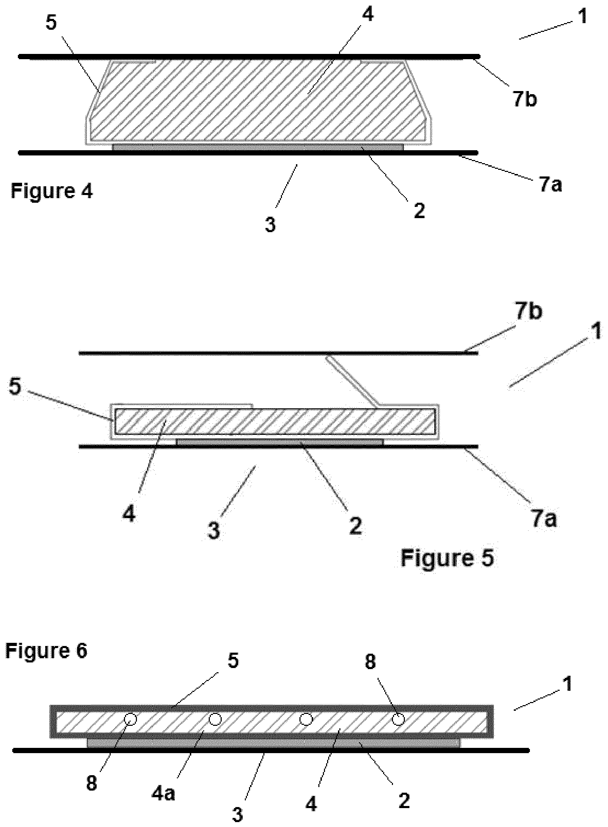

Selon une autre spécificité de cet exemple particulier, la gaine 5 déformable réalisée par une structure textile, tissée ou tricotée, comporte une mémoire élastique de forme qui tend à s'opposer aux pliures conditionnées par l'enveloppement du matériau intumescent 4. Aussi, le joint d'étanchéité 1 de l'invention est susceptible de présenter un arrangement bombé autour du matériau intumescent. Selon une construction adaptée, cet arrangement du joint d'étanchéité 1 qui comporte une forme bombée est susceptible de réaliser une jonction d'étanchéité à froid, c'est-à-dire dans des conditions environnementales quotidiennes hors situation de chauffe ou d'incendie. La structure bombée élastique du joint d'étanchéité 1 de l'invention se trouve ainsi positionné entre, d'une part, la pièce 7a qui forme la structure de support 3 et, d'autre part, la pièce 7b en vis-à-vis de laquelle le joint 1 est disposé. De façon alternative, seule une partie élastiquement déformée de la gaine 5 est arrangée pour être en contact avec la pièce 7b en vis-à-vis de laquelle le joint 1 est disposé pour opérer une jonction étanche à froid, comme illustré sur la figure 5.

Selon une alternative à l'exemple particulier de réalisation énoncé précédemment, la gaine 5 déformable est réalisée par au moins une structure métallique. Selon une construction préférée de cette structure métallique, la gaine 5 déformable est réalisée sous la forme d'un maillage qui permet d'apporter une souplesse et une déformabilité à la gaine 5 tout en profitant des propriétés de résistance à la chaleur et notamment aux températures importantes propres au métal. La réalisation d'une gaine 5 déformable à partir d'une structure métallique présente comme avantages, outre une résistance mécanique améliorée, une optimisation de la résistance de la gaine 5 face au feu. A l'inverse d'un tissu non-traité, une structure métallique ne se dégrade pas ou alors plus difficilement sous l'effet du feu. De plus, une gaine 5 intégrant une structure métallique présente comme avantage supplémentaire de permettre une conductivité électrique au travers de sa structure. Par ailleurs, une telle structure métallique présente également comme avantage de conserver une mémoire de forme limitée. En effet, à l'inverse d'une gaine 5 réalisée en tissus qui est susceptible de déformer le joint d'étanchéité 1 lors de son stockage en raison d'une mémoire de forme, une gaine 5 réalisée par une structure métallique conserve un arrangement sans déformation au cours de son stockage. La tenue d'une structure métallique permet de réaliser un maintien optimisé de la gaine 5 autour du matériau intumescent 4 de façon à contrôler, voire à calibrer, l'expansion du joint d'étanchéité 1 sous l'effet de la chaleur. Le choix du maillage, obtenu par tissage ou tricotage, et du diamètre des fils qui participent à cette structure métallique permet également d'anticiper le comportement de la gaine 5 sous l'action de l'expansion du matériau intumescent 4.

Selon une spécificité non-limitative propre à cet exemple de construction précédemment énoncé, la gaine 5 métallique déformable est réalisée par une toile métallique comprenant un maillage suffisamment restreint pour maintenir une cohésion au matériau intumescent 4 en expansion. Selon un exemple de construction, le maillage est réalisé par des fils de 160 µm de diamètre et comporte un espacement de l'ordre de 630 µm. Un tel espacement permet d'apporter une souplesse suffisamment importante à la structure métallique de la gaine 5 pour faciliter sa déformation, tout en évitant que cet espacement n'autorise au matériau intumescent 4 de traverser la gaine 5 métallique et aboutisse à une expansion anarchique.

Selon un autre exemple particulier de construction, le joint d'étanchéité 1 selon l'invention est caractérisé en ce que le matériau intumescent 4 comprend une composition à base de graphite et/ou de phosphate et/ou de silicate de sodium. Ces différentes compositions présentent des propriétés respectives permettant la réalisation de joints d'étanchéité 1 aux caractéristiques diversifiées. Les paramètres préférentiellement considérés pour sélectionner le matériau intumescent 4 le mieux adapté au type d'application d'un joint d'étanchéité 1 selon l'invention sont : la température d'activation de l'expansion, l'amplitude de l'expansion du matériau intumescent 4, le type d'expansion susceptible d'être simplement bidimensionnelle ou alternativement tridimensionnelle, la densité du produit expansé ou encore la pression d'expansion. La sélection du matériau intumescent 4 optimise l'adaptabilité du joint d'étanchéité 1 de l'invention aux différentes contraintes imposées par la structure support 3 du joint 1 telles que le type de structure de support 3 : acier, bois ou aluminium qui ne réagissent pas d'une façon similaire à la chaleur et ne présentent une tenue au feu identique. Une utilisation de graphite comme matériau intumescent 4 permet d'amorcer une expansion dès 160°C avec une multiplication 20 à 50 du volume initial du matériau. L'utilisation de phosphate comme matériau intumescent 4 permet un début de réaction à partir de 200°C avec une multiplication du volume de l'ordre de 70 fois. Le graphite et le phosphate présentent tous deux des expansions tridimensionnelles. A l'inverse, une utilisation de silicate de sodium présente une expansion en deux dimensions qui s'amorce dès 100°C avec une multiplication du volume de l'ordre de 3 ou 4 fois.

Selon un exemple particulier alternatif à l'exemple de construction précédent, le joint d'étanchéité 1 est caractérisé en ce qu'il comprend une structure moulée ou extrudée ou découpée. De façon préférée, le joint d'étanchéité 1 de l'invention adopte un arrangement conditionné, au moins en partie, par la forme du matériau intumescent 4, ce matériau 4 présentant classiquement une forme de section rectangulaire ou tubulaire. Cependant, la réalisation d'un joint 1 de l'invention selon une forme adaptée à une structure de support 3 de construction particulière est susceptible d'être réalisée à partir d'un matériau intumescent 4 moulé ou extrudé selon une forme spécifique aux particularités de l'arrangement de la structure de support 3.

Selon un autre exemple particulier de construction, le joint d'étanchéité 1 selon l'invention comprend un profil élastomère 6 enveloppé au moins partiellement par la gaine 5 déformable avec le matériau intumescent 4. Le profil élastomère 6 intégré au joint de l'invention est préférentiellement positionné au niveau de la portion du joint 1 qui fait face au volume d'espace destiné à être comblé par le joint 1 de l'invention. Le profil élastomère 6 présente alors une surface et un contour adapté à la surface de la pièce 7b en vis-à-vis de laquelle le joint 1 est positionné et qui participe, avec la pièce 7a qui forme la structure de support 3 du joint 1 d'étanchéité, à la délimitation du volume d'espace à combler, c'est-à-dire la pièce 7b en direction de laquelle le matériau intumescent 4 est destiné à s'expanser et contre laquelle le profil élastomère 1 est destiné à appuyer sous l'effet de l'expansion du matériau intumescent 4 pour optimiser le cloisonnement du volume d'espace. Selon un exemple de construction, le profil élastomère 6 comprend une lèvre destinée à être en contact avec la pièce 7b en direction de laquelle le matériau intumescent 4 est destiné à s'expanser. Un tel profil élastomère 6 permet ainsi d'opérer une étanchéité à froid, c'est-à-dire dans des conditions environnementales quotidiennes. L'élastomère 6 positionné entre, d'une part, la pièce 7a qui forme la structure de support 3 et, d'autre part, la pièce 7b en vis-à-vis de laquelle le joint 1 est disposé réalise une étanchéité quotidienne entre deux pièces. L'intégration de cet élastomère 6 au joint d'étanchéité 1 de l'invention permet ainsi de coupler une étanchéité optimisée du joint 1 en environnement froid avec une étanchéité efficace en environnement chaud, c'est-à-dire en cas d'incendie.

L'invention porte également sur un dispositif comportant au moins un passage destiné à être étanchéifié, caractérisé en ce que le dispositif comprend au moins un joint d'étanchéité 1 selon l'invention disposé le long d'au moins une portion du bord intérieur du passage. Le positionnement du joint d'étanchéité 1 au niveau du bord intérieur du passage permet ainsi une orientation de l'expansion du matériau intumescent 4 vers l'intérieur du passage pour combler celui-ci sous l'effet d'une activation du matériau intumescent 4 par la chaleur.

Selon un exemple particulier de construction du dispositif de l'invention selon laquelle celui-ci comporte une partie fixe 7a coopérant avec une partie mobile 7b, caractérisé en ce que le dispositif comprend au moins un joint d'étanchéité 1 selon l'invention disposé sur au moins une partie de la jonction entre les parties fixe 7a et mobile 7b. Selon un autre exemple de construction de l'invention, le joint 1 d'étanchéité est positionné au niveau de la jonction située entre le battant et le dormant d'une ouverture. Alternativement, le joint d'étanchéité est positionné entre les volets, qui présentent par exemple la forme de clapets, positionnés à l'intérieur ou en extrémité d'un conduit pour en cloisonner le passage. Il convient de noter que le joint 1 d'étanchéité de l'invention est susceptible d'être positionné aussi bien sur la partie fixe 7a du dispositif que sur la partie mobile 7b.

Selon un autre exemple particulier de construction, le dispositif intègre au moins un câblage électrique connecté à une partie de la structure métallique de la gaine 5 du joint d'étanchéité 1. A titre d'exemple complémentaire, le câblage électrique est associé à un dispositif de commande configuré pour actionner l'expansion du matériau intumescent 4 du joint d'étanchéité 1.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Joint d'étanchéité (1) comportant une surface de fixation (2) destinée à interagir avec la surface d'une structure support (3), **caractérisé en ce que** le joint (1) comprend également une longueur de matériau intumescent (4) enveloppé au moins partiellement dans une gaine (5) déformable réalisée par au moins une structure métallique formant une toile comprenant au moins un maillage suffisamment restreint pour maintenir une cohésion au matériau intumescent (4) en expansion.

2. Joint d'étanchéité (1) selon la revendication 1, **caractérisé en ce que** la structure métallique comprend au moins un métal ou alliage de métaux sélectionné pour ses qualités de conductivité électrique.

3. Joint d'étanchéité (1) selon une des revendications précédentes, **caractérisé en ce que** le matériau intumescent (4) est arrangé pour réaliser au moins un logement ou une cavité (8) apte à recevoir un appareillage.

4. Joint d'étanchéité (1) selon une des revendications précédentes, **caractérisé en ce que** les mailles d'au moins une partie du maillage de la structure métallique de la gaine (5) sont disposées selon un pas arrangé pour la réalisation d'une cage de Faraday.

5. Joint d'étanchéité (1) selon une des revendications précédentes, **caractérisé en ce que** la structure métallique comprend au moins un métal ou alliage de métaux sélectionné pour ses qualités de conductivité thermique.

6. Joint d'étanchéité (1) selon une des revendications précédentes, **caractérisé en ce que** la gaine (5) déformable est réalisée par une superposition de deux structures métalliques.

7. Joint d'étanchéité (1) selon une des revendications précédentes, **caractérisé en ce que** la gaine (5) déformable n'entoure que partiellement le matériau intumescent (4) de façon à laisser libre une portion de longueur du matériau intumescent (4).

8. Joint d'étanchéité (1) selon une des revendications 1 ou 2, **caractérisé en ce que** la gaine (5) déformable comprend également au moins une structure textile.

9. Joint d'étanchéité (1) selon une des revendications précédentes, **caractérisé en ce que** le matériau intumescent (4) comprend une composition à base de graphite et/ou de phosphate et/ou de silicate de sodium.

10. Joint d'étanchéité (1) selon une des revendications 1 à 9, **caractérisé en ce qu'**il présente un arrangement sous la forme d'une bande ou d'un cordon.

11. Joint d'étanchéité (1) selon une des revendications 1 à 9, **caractérisé en ce qu'**il comprend un profil élastomère enveloppé au moins partiellement par la gaine (5) déformable avec le matériau intumescent (4).

12. Dispositif comportant au moins un passage destiné à être étanchéifié, **caractérisé en ce que** le dispositif comprend au moins un joint d'étanchéité (1) selon une des revendications 1 à 11 disposé le long d'au moins une portion du bord intérieur du passage.

13. Dispositif selon la revendication 12, comportant une partie fixe (7a) coopérant avec une partie mobile (7b), **caractérisé en ce que** le dispositif comprend au moins un joint d'étanchéité (1) selon une des revendications 1 à 11 disposé sur au moins une partie de la jonction entre les parties fixe (7a) et mobile (7b).

14. Dispositif selon une des revendications précédentes, **caractérisé en ce que** le dispositif intègre au moins un câblage électrique connecté à une partie de la structure métallique de la gaine (5) du joint d'étanchéité (1).
